(19) Europäisches Patentamt
European Patent Office
Office européen des brevets

(11) **EP 3 591 337 B1**

(12) **EUROPEAN PATENT SPECIFICATION**

(45) Date of publication and mention
of the grant of the patent:
**15.05.2024 Bulletin 2024/20**

(21) Application number: **18181402.1**

(22) Date of filing: **03.07.2018**

(51) International Patent Classification (IPC):
**G01C 21/20** (2006.01)   **G05D 1/00** (2024.01)
**G05D 1/08** (2006.01)   **G05D 1/02** (2020.01)
**A63H 30/04** (2006.01)

(52) Cooperative Patent Classification (CPC):
**G01C 21/20; G05D 1/0011**

(54) **COORDINATE SYSTEM TRANSFORMATION METHOD AND APPARATUS, HEADING CONTROL METHOD FOR AERIAL VEHICLE, AND AERIAL VEHICLE**

VERFAHREN UND VORRICHTUNG ZUR TRANSFORMATION EINES KOORDINATENSYSTEMS, VERFAHREN ZUR STEUERUNG DES KURSES FÜR EIN LUFTFAHRZEUG UND LUFTFAHRZEUG

PROCÉDÉ ET APPAREIL DE TRANSFORMATION DE SYSTÈME DE COORDONNÉES, PROCÉDÉ DE COMMANDE DE CAP POUR VÉHICULE AÉRIEN ET VÉHICULE AÉRIEN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.01.2020 Bulletin 2020/02**

(73) Proprietor: **Autel Robotics Europe GmbH**
**85737 Ismaning (DE)**

(72) Inventors:
• **WANG, Jian**
**85737 Ismaning (DE)**

• **RAFFLER, Thomas**
**85737 Ismaning (DE)**

(74) Representative: **Gulde & Partner**
**Patent- und Rechtsanwaltskanzlei mbB**
**Wallstraße 58/59**
**10179 Berlin (DE)**

(56) References cited:
**US-A1- 2013 173 088**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## BACKGROUND

### Technical Field

The present invention relates to the field of heading control technologies for aerial vehicles, and in particular, to a coordinate system transformation method and apparatus, a heading control method for an aerial vehicle, and an aerial vehicle.

### Related Art

During heading control of traditional aerial vehicles, there is a plurality of different coordinate systems, and a rigid body rotation representation method such as an Euler angle rotation transformation is needed to transform coordinate systems. An aerial vehicle can conveniently respond to a control signal by constructing a corresponding coordinate system in a speed vector control manner, so as to realize the change of the heading of the aerial vehicle.

During implementation of the present invention, the inventor finds that the prior art has at least the following problems: There is asymmetry when transformation relationships between different coordinate systems is represented or defined by using a traditional Euler angle.

Therefore, when control is performed based on the foregoing transformation relationship or mathematic representation method, control behaviors on the aerial vehicle are asymmetric and it is not intuitive in terms of human feelings. In addition, the precision of physical control over heading of the aerial vehicle is also limited.

Document D1 (US2013/173088 A1) discloses that the user inclines the apparatus (16) according to the pitch (32) and roll (34) axes to produce inclination signals (.theta..sub.I, .phi..sub.I) which are transformed into corresponding command setpoints (.theta..sub.d, .phi..sub.d) for the drone (10) in terms of attitude of the drone according to the pitch (22) and roll (24) axes of the drone. The drone and the apparatus each determine the orientation of their local reference frame (X.sub.IY.sub.IZ.sub.I; X.sub.bY.sub.bZ.sub.b) in relation to an absolute reference frame linked to the ground (X.sub.NEDY.sub.NEDZ.sub.NED), to determine the relative angular orientation of the drone in relation to the apparatus. Then, the reference frame of the apparatus is realigned on the reference frame of the drone by a rotation that is a function of this relative angular orientation. The realigned values thus correspond to user commands referenced in the reference frame of the apparatus and no longer in that of the drone, which allows for more intuitive piloting when the user is watching the drone.

## SUMMARY

To resolve the foregoing technical problems, embodiments of the present invention provide a heading control method for an aerial vehicle and an aerial vehicle.

To resolve the foregoing technical problems, an embodiment of the present invention further provides the following technical solution: a heading control method for an aerial vehicle

receiving a control instruction from a controller, the control instruction comprising at least one initial acceleration in a control coordinate system;
transforming the initial acceleration in the control coordinate system to a first acceleration in the north-east-down coordinate system;
transforming the first acceleration in the north-east-down coordinate system to a target acceleration of a body coordinate system by using an Euler angle rotation matrix; and
controlling a motor of the aerial vehicle to operate according to the target acceleration;
wherein the transforming the initial acceleration in the control coordinate system to the first acceleration in the north-east-down coordinate system comprises:

obtaining an X-axis unit vector and a Y-axis unit vector of projections of an X-axis and a Y-axis of the body coordinate system on to a level plane of the north-east-down coordinate system, the body coordinate system being a coordinate system with the aerial vehicle as a coordinate origin;

calculating a vector sum of the X-axis unit vector $k_x$ and the Y-axis unit vector $\mathbf{k}_y$;

representing an inclination angle by using the vector sum; and

performing transformation between the north-east-down coordinate system and the control coordinate system by using the inclination angle;

wherein the X-axis unit vector and the Y-axis unit vector are respectively calculated by using the following formulas;

$$\mathbf{k}_x = \frac{\mathbf{T} \cdot \begin{bmatrix} 1 \\ 0 \end{bmatrix}}{\left\| \mathbf{T} \cdot \begin{bmatrix} 1 \\ 0 \end{bmatrix} \right\|}; \quad \mathbf{k}_y = \frac{\mathbf{T} \cdot \begin{bmatrix} 0 \\ 1 \end{bmatrix}}{\left\| \mathbf{T} \cdot \begin{bmatrix} 0 \\ 1 \end{bmatrix} \right\|}$$

wherein T is a 2x2 matrix consisting of data taken from first two rows and first two columns of the Euler angle rotation matrix, $k_x$ is the X-axis unit vector, $k_y$ is the Y-axis unit vector and $\left\| \mathbf{T} \cdot \begin{bmatrix} 1 \\ 0 \end{bmatrix} \right\|$ is a norm of a product of matrices;

wherein the inclination angle is represented by using the following formula:

$$\Psi = \tan^{-1} \frac{\mathbf{k}(2)}{\mathbf{k}(1)} - 45°$$

wherein $\Psi$ is the inclination angle, the vector sum is a two-dimensional vector, and k(2) and k(1) are respectively the length of projections of the vector sum on the Y-axis and the X-axis.

A rotation sequence of the Euler angle rotation matrix is that the Euler angle rotation matrix sequentially rotates with respect to a roll axis, a heading axis and a pitch axis of the aerial vehicle.

To resolve the foregoing technical problems, an embodiment of the present invention further provides the following technical solution: an unmanned aerial vehicle.

The unmanned aerial vehicle includes a body, rotors, a motor for driving the rotors to rotate and a controller. The rotors are symmetrically disposed on the body; and the controller controls operation of the motor by using the heading control method for an aerial vehicle described above.

In some embodiments, the unmanned aerial vehicle is a four-rotor aerial vehicle; and any two of the four rotors are symmetrically disposed with respect to the body.

Compared with the prior art, the inclination angle is represented in the coordinate system transformation method provided in the embodiments of the present invention in a new manner, so that rotation transformation between the north-east-down (NED) coordinate system and the control coordinate system (stick frame) is symmetric, the precision of heading control of the aerial vehicle can be effectively improved, and a control behavior is more intuitive.

## BRIEF DESCRIPTION OF THE DRAWINGS

One or more embodiments are exemplarily described by using figures that are corresponding thereto in the accompanying drawings. The exemplary descriptions do not constitute a limitation on the embodiments. Elements with a same reference numeral in the accompanying drawings represent similar elements. Unless otherwise particularly stated, the figures in the accompanying drawings constitute no proportional limitation.

FIG. 1 is a schematic diagram of an application environment according to an embodiment of the present invention;

FIG. 2 is a schematic diagram of a geometric relationship between a north-east-down coordinate system and a control coordinate system;

FIG. 3 shows a correlation between a pitch rate and an inclination angle when $\Phi = 20°$;

FIG. 4 shows a correlation between a roll rate and an inclination angle when $\Theta = 20°$;

FIG. 5 is a schematic diagram of a coordinate system transformation method for an aerial vehicle according to an embodiment of the present invention;

FIG. 6 is a schematic diagram of a geometric relationship between a north-east-down coordinate system and a body coordinate system according to an embodiment of the present invention;

FIG. 7 shows a correlation between a pitch rate and an inclination angle when $\Phi = 20°$ according to a coordinate system transformation method provided in an embodiment of the present invention;

FIG. 8 shows a correlation between a roll rate and an inclination angle on the premise that $\Theta = 20°$ according to a coordinate system transformation method provided in an embodiment of the present invention;

FIG. 9 is a block diagram of functions of a coordinate system transformation apparatus according to an embodiment of the present invention; and

FIG. 10 is a schematic structural diagram of an unmanned aerial vehicle control system according to an embodiment of the present invention.

## DETAILED DESCRIPTION

For ease of understanding the present invention, the present invention is described in further detail below with reference to the accompanying drawings and specific embodiments. It should be noted that when an element is described as being "fixed" on another element, the element may be directly on the another element, or one or more intermediate elements may exist therebetween. When an element is described as being "connected" to another element, the element may be directly connected to the another element, or one or more intermediate elements may exist therebetween. Directions and location relationships indicated by terms such as "upper", "lower", "inner", "outer" and "bottom" used in this specification are based on directions and location relationships shown in the accompanying drawings and are merely for ease of describing the present invention and simplifying descriptions rather than indicating or suggesting that a directed apparatus or element must have a specific direction and be constructed and operated in a specific direction, and therefore cannot be understood as a limitation on the present invention. In addition, terms such as "first", "second" and "third" are merely used for the purpose of description and cannot be understood as indicating or suggesting relative importance.

Unless otherwise defined, meanings of all technical and scientific terms used in this specification are the same as that usually understood by a person skilled in the technical field to which the present invention belongs. The terms used in this specification of the present invention are merely intended to describe specific implementations rather than limit the present invention. A term "and/or" used in this specification includes any or all combinations of one or more related listed items.

In addition, technical features involved in different embodiments of the present invention that are described below can be combined with each other provided that the technical features constitute no conflict.

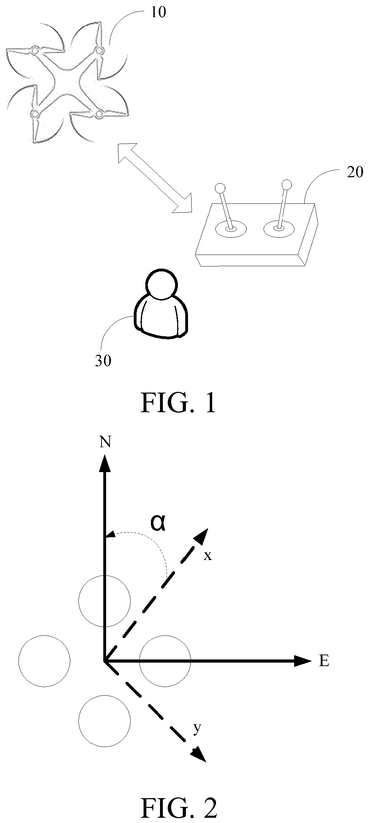

FIG. 1 shows an application environment according to an embodiment of the present invention. As shown in FIG. 1, the application environment includes an unmanned aerial vehicle 10, a remote control 20 and a user 30.

The unmanned aerial vehicle 10 may be any type of unmanned aerial vehicles, for example, a four-axis unmanned aerial vehicle. The unmanned aerial vehicle 10 may specifically include several parts such as a body, rotors, a motor for driving the rotors to rotate and a controller. One or more motors operate under the control of the controller. A transmission mechanism drives the rotors to rotate to provide an acceleration in a corresponding direction for the unmanned aerial vehicle, so that the unmanned aerial vehicle completes various actions, for example, turning, accelerating, ascending or descending.

Specifically, as shown in FIG. 1, the unmanned aerial vehicle may be a four-rotor aerial vehicle. The four rotors are symmetrically disposed with respect to two axial directions of the body, and as four corners, the four rotors enclose a quadrangle having two symmetry axes.

The remote control 20 may be any type of user device that establishes a communication connection to the unmanned aerial vehicle 10. The remote control 20 is provided with one or more interaction devices such as a joystick, operation keys or a touchscreen which is configured to input a control instruction by the user 30, to control the unmanned aerial vehicle 10 to perform different flying actions.

The control instruction input by the user 30 is finally transformed to a corresponding acceleration provided for the controller of the motor. The controller of the motor controls the motor to operate to generate a corresponding acceleration. During operation in which heading of the aerial vehicle is controlled by a speed, a "control coordinate system" (stick frame) needs to be constructed. In this specification, $\overline{O}$ represents the "control coordinate system". In the coordinate system, an x-axis represents a heading direction of the aerial vehicle, and a y-axis represents a starboard direction of the aerial vehicle.

When the user applies a corresponding operation instruction on the remote control, for example, when the user expects to apply an acceleration a in an x-axis direction, the controller of the aerial vehicle first needs to transform the coordinate system to a "north-east-down coordinate system" (NED-frame), and then after the controller of the aerial vehicle transforms the coordinate system to corresponding vectors in a final "body coordinate system" (body frame) by using an Euler angle transformation method, the controller of the aerial vehicle can control the operating state of the motor and change the heading of the aerial vehicle.

FIG. 2 is a typical schematic diagram of a correlation between a north-east-down coordinate system and a control coordinate system. As shown in FIG. 2, when a z-axis of the control coordinate system overlaps a z-axis of the north-east-down coordinate system, both an x-axis and a y-axis of the control coordinate system are in a level plane of the north-east-down coordinate system, and a relationship thereof may be represented by using an angle $\alpha$ between the x-axis and the north direction (N).

Generally, an angle $\alpha_{\overline{O}}$ is represented by using an inclination angle $\Psi$ of an Euler angle (a rotation matrix of the Euler angle rotates in a sequence of roll axis, heading axis and pitch axis, that is, in an x-y-z sequence). An expression of the inclination angle $\Psi$ is represented by using the following formula (1):

$$\Psi = \frac{\sin\Phi}{\cos\Theta}q + \frac{\cos\Phi}{\cos\Theta}r \qquad (1)$$

As can be seen from the formula (1), in a common expression of the inclination angle, the inclination angle depends only on a pitch rate r and a yaw rate q, but not on a roll rate p. Therefore, the inclination angle is obviously asymmetric.

To further verify the asymmetry of a yaw angle caused by using a common mathematic expression, changes as a function of changes of a pitch angle may be observed when a roll angle is kept invariable, or changes as a function of changes of a roll angle may be observed when a pitch angle is kept invariable.

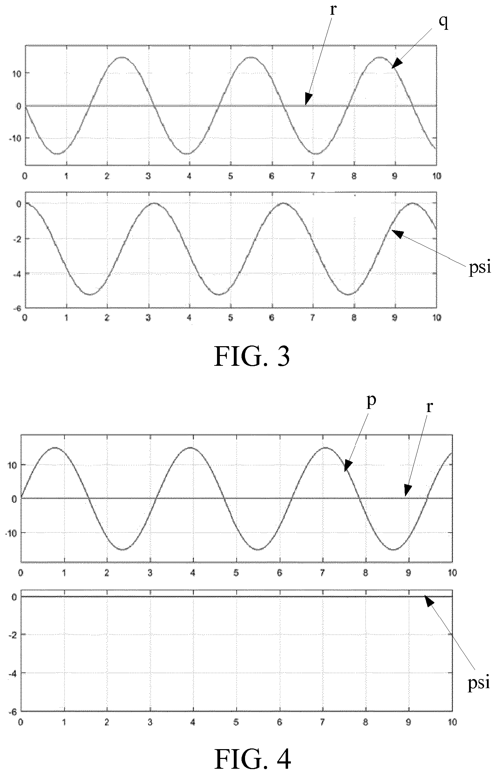

FIG. 3 shows a correlation between a pitch rate and an inclination angle $\Psi$ (psi) on the premise that $\Phi = 20°$. FIG. 4 shows a correlation between a roll rate and an inclination angle $\Psi$ (psi) on the premise that $\Theta = 20°$.

It should be noted that the experiment shown in FIG. 3 and FIG. 4 are performed as a simulation in an ideal state, hence error in estimates were not considered. During actual control operations of the aerial vehicle, results may be different from those shown in FIG. 3 and FIG. 4, but it doesn't affect the verification that asymmetry does exist during the adjustment of the inclination angle Ψ (psi).

The asymmetry that the inclination angle has causes a series of problems. Generally, power layouts of the aerial vehicle are symmetrically disposed with respect to an axis of the body. Therefore, during control of the aerial vehicle, it is expected to use symmetric mathematic expressions or control manners. Moreover, a symmetric coordinate system transformation manner makes heading control more intuitive for people.

Embodiments of the present invention provide a new coordinate system transformation method. In this transformation method, the inclination angle is represented in a new manner, so that transformation between a control coordinate system and a north-east-down coordinate system is symmetric, which provides a better heading control effect of the aerial vehicle.

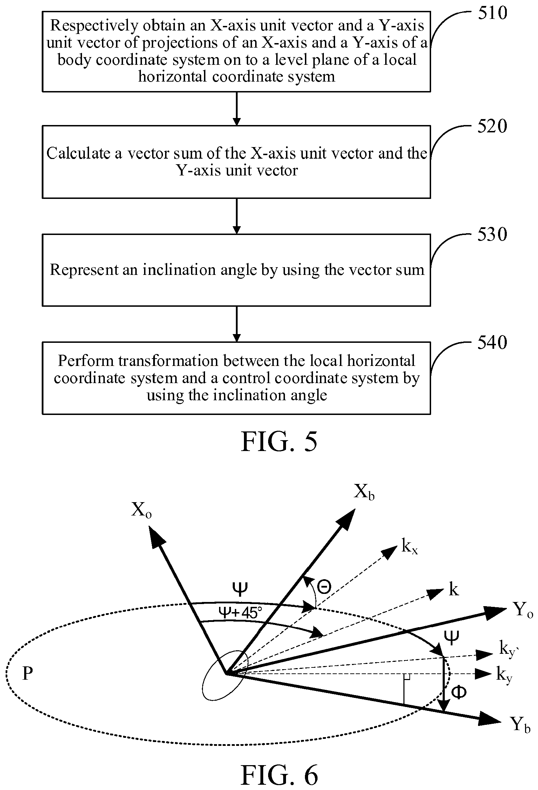

As shown in FIG. 5, the coordinate system transformation method for an aerial vehicle includes the following steps:

510. Respectively obtain an X-axis unit vector and a Y-axis unit vector of projections of an X-axis and a Y-axis of a body coordinate system on to a level plane of a north-east-down coordinate system.

In the present embodiment, mutual transformation needs to be performed on three different coordinate systems: the body coordinate system, a north-east-down coordinate system and a control coordinate system.

The body coordinate system is a coordinate system with the center of gravity of the aerial vehicle as a coordinate origin. The coordinate system is a basis for heading control of the aerial vehicle, and three axes of the coordinate system are respectively a pitch axis, a roll axis and a yaw axis. Finally, speed vectors output from the aerial vehicle are vectors represented in the body coordinate system.

The north-east-down coordinate system (NED frame) is a coordinate system commonly used in navigation calculation. Three axes of the coordinate system respectively point to North, East and Down. By using the north-east-down coordinate system, the unmanned aerial vehicle can be conveniently controlled by means of speed vector.

The control coordinate system (stick frame) is a planar coordinate system of locations of the aerial vehicle. The coordinate system is a reference of control instructions input by a user. An acceleration or a speed vector corresponding to a control instruction is based on the control coordinate system and needs to rotate and be transformed to the body coordinate system by using the Euler angle, so as to implement heading control during flying.

520. Calculate a vector sum of the X-axis unit vector and the Y-axis unit vector.

The X-axis unit vector and the Y-axis unit vector are two two-dimensional vectors having a length unit of 1, representing corresponding directions of projections on to the level plane. The vector sum of the X-axis unit vector and the Y-axis unit vector is also a two-dimensional vector.

530. Represent an inclination angle by using the vector sum.

Based on a three-dimensional geometric relationship between the two coordinate systems, a correlation between the vector sum and the inclination angle is determined. Based on the correlation, the inclination angle represented by using the vector sum may be obtained through derivation.

540. Perform transformation between the north-east-down coordinate system and a control coordinate system by using the inclination angle.

After a new expression of the inclination angle is obtained, based on the new expression, mutual transformation is performed between the north-east-down coordinate system and the control coordinate system (to solve for an angle $\alpha_{\overline{O}}$).

In the expression of the transformation relationship between the north-east-down coordinate system and the control coordinate system provided in the present embodiment, the sum of these two unit vectors would represent the heading in a more accurate sense by involving the contributions of both the x-axis and the y-axis and thereby assuring symmetry along both axes with regard to the flight performance, since during calculation of heading, each axis is considered.

A construction process of the expression of the inclination angle is described in detail below with reference to a calculation principle diagram shown in FIG. 6. As shown in FIG. 6, there are two different three-dimensional coordinate systems, which are respectively a body coordinate system B and a north-east-down coordinate system O. An X-axis and a Y-axis of the body coordinate system B are respectively represented by $X_b$ and $Y_b$ and an X-axis and a Y-axis of the north-east-down coordinate system O are respectively represented by $X_o$ and $Y_o$. $X_o$ and $Y_o$ form a level plane P.

A transformation relationship between the two coordinate systems is represented in a manner of rotation transformation by using the Euler angle (in a sequence of x-y-z). After sequentially rotating by three angles of Ψ, Θ, Φ with respect to the roll axis, the heading axis and the pitch axis, the coordinate system can be transformed from the north-east-down coordinate system O to the body coordinate system B. $k_y'$ is a reference line in a level plane of the north-east-down coordinate system, used for representing the angles Θ and Φ.

Based on the foregoing coordinate system transformation relationship, projections of the $X_b$-axis and the $Y_b$-axis of the body coordinate system B on the level plane of the north-east-down coordinate system and their respective unit vectors $k_x$ and $k_y$ are determined.

$k_x$ is calculated by using a formula (2) and $k_y$ is calculated by using a formula (3):

$$\mathbf{k}_x = \frac{\mathbf{T} \cdot \begin{bmatrix} 1 \\ 0 \end{bmatrix}}{\left\| \mathbf{T} \cdot \begin{bmatrix} 1 \\ 0 \end{bmatrix} \right\|} \qquad (2)$$

$$\mathbf{k}_y = \frac{\mathbf{T} \cdot \begin{bmatrix} 0 \\ 1 \end{bmatrix}}{\left\| \mathbf{T} \cdot \begin{bmatrix} 0 \\ 1 \end{bmatrix} \right\|} \qquad (3)$$

In the foregoing formula (1) and formula (2), T is a 2x2 matrix taken from the Euler angle rotation matrix.

Specifically, T is a 2x2 matrix consisting of data taken from first two rows and first two columns of the Euler angle rotation matrix. The Euler angle rotation matrix is an Euler angle rotation matrix by using which the north-east-down coordinate system is transformed to the body coordinate system.

That is, T is represented as follows by using a formula(4):

$$\mathbf{T}_{2X2} = \mathbf{M}_{OB} (\, 1:2, 1:2 \,) \qquad (4)$$

$\mathbf{M}_{OB}$ is an existing classical Euler angle rotation matrix that is very commonly used.

Still referring to FIG. 6, the two unit vectors $k_x$ and $k_y$ are added to obtain a two-dimensional vector k in the level plane. In the present embodiment, the two-dimensional vector k is represented by (k1, k2), that is, the lengths of projections of the two-dimensional vector on an x-axis and a y-axis of the level plane.

The vector k is formed by adding the two unit vectors $k_x$ and $k_y$. As a result, the vector k is introduced to the x-axis and the y-axis. According to the geometric relationship shown in FIG. 6, it is seen that a tan value of the two-dimensional vector k is equal to a sum of the inclination angle and 45°. Therefore, a mathematic expression of the inclination angle $\Psi$ is obtained through derivation as shown in a formula (5):

$$\Psi = \tan^{-1} \frac{\mathbf{k}(2)}{\mathbf{k}(1)} - 45° \qquad (5)$$

k(2) is the length of a projection of the two-dimensional vector k on the Y-axis of the level plane, and k(1) is the length of a projection of the two-dimensional vector k on the X-axis of the level plane.

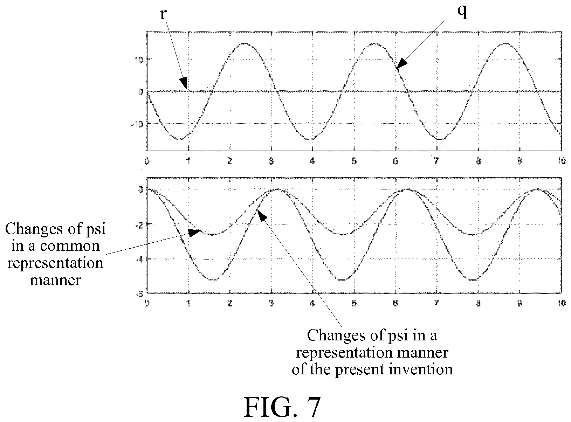

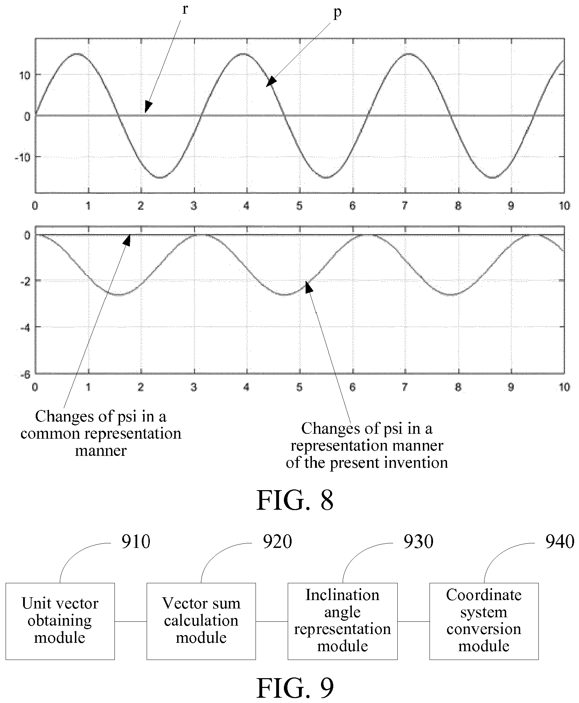

FIG. 7 and FIG. 8 show correlations of angular rates and inclination angles of axes of the body coordinate system when the coordinate system transformation method provided in the embodiments of the present invention is applied.

FIG. 7 shows a correlation between a pitch rate and an inclination angle (psi) on the premise that $\Phi$ = 20°. FIG. 8 shows a correlation between a roll rate and an inclination angle (psi) on the premise that $\Theta$ = 20°.

During actual operation, a heading angle that changes by means of oscillation generates corresponding vertical height changes in a height direction (the Z-axis) of the aerial vehicle, which can be seen from a comparison between FIG. 3-4 and FIG. 7-8.

In a traditional inclination angle expression, the changes in the vertical height completely unrelated to an angular rate on a roll axis. This means that although two states are visibly the same (for example, angles of other axes remain invariable and only the roll rate changes), results still change due to characteristics of representation by using the Euler angle. That is, representation of the traditional Euler angle causes asymmetry.

However, when the expression provided in the present embodiment of the present invention is used, there may be similar control behaviors in different cases. In the definition of the transformation relationship between the coordinate systems, the projections of the X-axis and the Y-axis of the body coordinate system on the north-east-down coordinate system are introduced. Therefore, the definition or the transformation formula has symmetry, problems exist during transformation of the control coordinate system can be resolved and control behaviors are symmetric and intuitive.

It should be noted that the coordinate system transformation method provided in the present embodiment of the present invention can also be applied to heading control of other types of moving devices in addition to the application environment of flying control of the unmanned aerial vehicle shown in FIG. 1, to resolve a problem of asymmetry that exists when rotation transformation is performed between coordinate systems by using the Euler angle.

An embodiment of the present invention further provides a coordinate system transformation apparatus. FIG. 9 is a schematic structural diagram of the coordinate system transformation apparatus according to the present embodiment of the present invention.

As shown in FIG. 9, the coordinate system transformation apparatus for an aerial vehicle includes: a unit vector obtaining module 910, a vector sum calculation module 920, an inclination angle representation module 930 and a coordinate system transformation module 940.

The unit vector obtaining module 910 is configured to obtain an X-axis unit vector and a Y-axis unit vector of projections of an X-axis and a Y-axis of a body coordinate system on to a level plane of a north-east-down coordinate system. The body coordinate system is a coordinate system with the aerial vehicle as a coordinate origin.

The vector sum calculation module 920 is configured to calculate a vector sum of the X-axis unit vector and the Y-axis unit vector. The inclination angle representation module 930 is configured to represent an inclination angle by using the vector sum. The coordinate system transformation module 940 is configured to perform transformation between the north-east-down coordinate system and a control coordinate system by using the inclination angle.

During actual operation, first, the unit vector obtaining module 910 obtains a projected X-axis unit vector and Y-axis unit vector. Then, the vector sum calculation module 930 calculates a vector sum of the two unit vectors, to obtain a two-dimensional vector. The inclination angle representation module 930 represents an inclination angle based on the calculated vector sum. The coordinate system transformation module 940 performs transformation between the north-east-down coordinate system and the control coordinate system by using the inclination angle represented by using the vector sum and provides a symmetric and intuitive adjustment behavior.

In some embodiments, transformation is performed between the body coordinate system and the north-east-down coordinate system by using an Euler angle rotation matrix in a sequence of x-y-z. That is, a vector in the body coordinate system is transformed to a vector in the north-east-down coordinate system by using the Euler angle rotation matrix.

Specifically, the unit vector obtaining module respectively calculates the X-axis unit vector and the Y-axis unit vector by using the following formulas:

$$\mathbf{k}_x = \frac{\mathbf{T} \cdot \begin{bmatrix} 1 \\ 0 \end{bmatrix}}{\left\| \mathbf{T} \cdot \begin{bmatrix} 1 \\ 0 \end{bmatrix} \right\|}, \quad \mathbf{k}_y = \frac{\mathbf{T} \cdot \begin{bmatrix} 0 \\ 1 \end{bmatrix}}{\left\| \mathbf{T} \cdot \begin{bmatrix} 0 \\ 1 \end{bmatrix} \right\|}$$

T is a 2x2 matrix consisting of data taken from first two rows and first two columns of the Euler angle rotation matrix, $k_x$ is the X-axis unit vector, $k_y$ is the Y-axis unit vector and $\left\| \mathbf{T} \cdot \begin{bmatrix} 1 \\ 0 \end{bmatrix} \right\|$ is a norm of a product of the matrix T and a matrix $\begin{bmatrix} 1 \\ 0 \end{bmatrix}$.

More specifically, the inclination angle representation module represents the inclination angle by using the following formula:

$$\Psi = \tan^{-1} \frac{\mathbf{k}(2)}{\mathbf{k}(1)} - 45°$$

$\Psi^*$ is the inclination angle, the vector sum is a two-dimensional vector, and k(2) and k(1) are respectively the lengths of projections of the vector sum on the Y-axis and the X-axis of a level plane.

On one hand, the coordinate system transformation apparatus provided in the present embodiment of the present invention does not cause an asymmetric adjustment behavior rising in a flight attitude while improving gains of outer-loop control. On the other hand, an attitude estimation result of the aerial vehicle affects behaviors of the aerial vehicle in a symmetric manner. In this way, the designer of the controller of the aerial vehicle can have a direct understanding when designing the controller.

In the present embodiment, the coordinate system transformation method is independent. The new expression of the inclination angle can only be used when transformation is performed between the north-east-down coordinate system and the control coordinate system. When transformation is performed between the north-east-down coordinate system and the body coordinate system, the aerial vehicle control method can still be compatible with or use the traditional Euler angle transformation matrix, and definitions of other angles of the Euler angle do not need to be correspondingly modified.

In this way, the coordinate system transformation method can be conveniently added to a traditional aerial vehicle control system as an additional function module, thereby implementing more precise and better control performance.

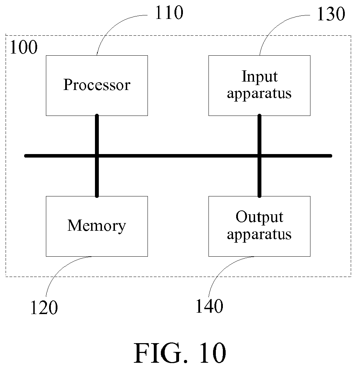

FIG. 10 is a schematic structural diagram of an unmanned aerial vehicle control system 100 according to an embodiment of the present invention. As shown in FIG. 10, the unmanned aerial vehicle control system 100 includes one or more processors 110 and a memory 120. In FIG. 10, one processor 110 is used as an example.

The unmanned aerial vehicle control system for performing the foregoing coordinate system transformation method may further include an input apparatus 130 and an output apparatus 140. Certainly, other appropriate modules may be added or reduced according to a need of an actual case.

The processor 110, the memory 120, the input apparatus 130 and the output apparatus 140 may be connected by using a bus or in other forms. FIG. 10 shows an example in which connection is performed by using a bus.

As a non-volatile computer-readable storage medium, the memory 120 may be configured to store a non-volatile software program, a non-volatile computer executable program and a module, for example, the program instruction or the module corresponding to the coordinate system transformation method method in the embodiments of the present invention, for example, the unit vector obtaining module 910, the vector sum calculation module 920, the inclination angle representation module 930 and the coordinate system transformation module 940 shown in FIG. 9. By running the non-volatile software program, the instruction and the module that are stored in the memory 120, the processor 110 performs various functional application and data processing of a server, that is, implements the coordinate system transformation method in the foregoing method embodiments.

The memory 120 may include a program storage section and a data storage section. The program storage section may store an operating system and an application program needed by at least one function. The data storage section may store data created according to the use of the coordinate system transformation apparatus. In addition, the memory 120 may include a high speed random access memory, and may further include a non-volatile memory, such as at least one magnetic disk storage device, a flash memory, or other volatile solid-state storage devices. In some embodiments, the memory 120 optionally includes a memory disposed remotely to the processor 110. Examples of the foregoing network include, but are not limited to, the Internet, an intranet, a local area network, a mobile communication network and a combination thereof.

The input apparatus 130 may receive input digit or character information, and generate a key signal input related to the user setting and function control of the coordinate system transformation apparatus. The output apparatus 140 may include a display device such as a display screen. The one or more modules are stored in the memory 120 and when executed by the one or more processors 110, perform the coordinate system transformation method in any of the foregoing method embodiments.

A person skilled in the art may be further aware that, in combination with the examples described in the embodiments disclosed in this specification, the steps of the coordinate system transformation method may be implemented by electronic hardware, computer software, or a combination thereof. To clearly describe the interchangeability between the hardware and the software, the foregoing has generally described compositions and steps of each example according to functions. Whether the functions are performed in the form of hardware or software depends on the particular application of the technical solutions and the constraint conditions of the design.

A person skilled in the art can accomplish the described functions by using different methods in each specific application, but this accomplishment shall not be deemed as going beyond the protection scope of the present invention. The computer software may be stored in a computer readable storage medium, and the program when executed, may include procedures of the foregoing method embodiments. The storage medium may be a magnetic disk, an optical disc, a read-only memory, a random access memory, or the like.

**Claims**

1. A heading control method for an aerial vehicle, comprising:

    receiving a control instruction from a controller, the control instruction comprising at least one initial acceleration in a control coordinate system;
    transforming the initial acceleration in the control coordinate system to a first acceleration in the north-east-down coordinate system;
transforming the first acceleration in the north-east-down coordinate system to a target acceleration of a body coordinate system by using an Euler angle rotation matrix; and
controlling a motor of the aerial vehicle to operate according to the target acceleration;
wherein the transforming the initial acceleration in the control coordinate system to the first acceleration in the north-east-down coordinate system comprises:

    obtaining (510) an X-axis unit vector and a Y-axis unit vector of projections of an X-axis and a Y-axis of the body coordinate system on to a level plane of the north-east-down coordinate system, the body coordinate system being a coordinate system with the aerial vehicle as a coordinate origin;
    calculating (520) a vector sum of the X-axis unit vector $k_x$ and the Y-axis unit vector $\mathbf{k}_y$;
    representing (530) an inclination angle by using the vector sum; and
    performing (540) transformation between the north-east-down coordinate system and the control coordinate system by using the inclination angle;
    wherein the X-axis unit vector and the Y-axis unit vector are respectively calculated by using the following formulas;

$$\mathbf{k}_x = \frac{\mathbf{T} \cdot \begin{bmatrix} 1 \\ 0 \end{bmatrix}}{\left\| \mathbf{T} \cdot \begin{bmatrix} 1 \\ 0 \end{bmatrix} \right\|}; \quad \mathbf{k}_y = \frac{\mathbf{T} \cdot \begin{bmatrix} 0 \\ 1 \end{bmatrix}}{\left\| \mathbf{T} \cdot \begin{bmatrix} 0 \\ 1 \end{bmatrix} \right\|}$$

wherein T is a 2x2 matrix consisting of data taken from first two rows and first two columns of the Euler angle rotation matrix, $k_x$ is the X-axis unit vector, $k_y$ is the Y-axis unit vector and $\left\| \mathbf{T} \cdot \begin{bmatrix} 1 \\ 0 \end{bmatrix} \right\|$ is a norm of a product of matrices;
wherein the inclination angle is represented by using the following formula:

$$\Psi = \tan^{-1} \frac{\mathbf{k}(2)}{\mathbf{k}(1)} - 45°$$

wherein $\Psi$ is the inclination angle, the vector sum is a two-dimensional vector, and k(2) and k(1) are respectively the length of projections of the vector sum on the Y-axis and the X-axis.

**2.** The heading control method according to claim 1, wherein a rotation sequence of the Euler angle rotation matrix is that the Euler angle rotation matrix sequentially rotates with respect to a roll axis, a heading axis and a pitch axis of the aerial vehicle.

**3.** An unmanned aerial vehicle, **characterized by** comprising a body, rotors, a motor for driving the rotors to rotate and a controller, wherein the rotors are symmetrically disposed on the body; and the controller controls operation of the motor by using the heading control method for an aerial vehicle according to any of claims 1-2.

**4.** The unmanned aerial vehicle according to claim 3, wherein the unmanned aerial vehicle is a four-rotor aerial vehicle; and any two of the four rotors are symmetrically disposed with respect to the body.

**Patentansprüche**

**1.** Verfahren zur Steuerung des Kurses für ein Luftfahrzeug, umfassend:

Empfangen eines Steuerbefehls von einer Steuerung, wobei der Steuerbefehl mindestens eine Anfangsbeschleunigung in einem Steuerkoordinatensystem umfasst;

Transformieren der Anfangsbeschleunigung im Steuerkoordinatensystem in eine erste Beschleunigung im North-East-Down-Koordinatensystem;

Transformieren der ersten Beschleunigung im North-East-Down-Koordinatensystem in eine Zielbeschleunigung eines Körperkoordinatensystems unter Verwendung einer Eulerwinkel-Rotationsmatrix und

Steuern eines Motors des Luftfahrzeugs zum Betrieb gemäß der Zielbeschleunigung;

wobei das Transformieren der Anfangsbeschleunigung im Steuerkoordinatensystem in die erste Beschleunigung im North-East-Down-Koordinatensystem Folgendes umfasst:

Erhalten (510) eines X-Achsen-Einheitsvektors und eines Y-Achsen-Einheitsvektors aus Projektionen einer X-Achse und einer Y-Achse des Körperkoordinatensystems auf einer ebenen Fläche des North-East-Down-Koordinatensystems, wobei es sich bei dem Körperkoordinatensystem um ein Koordinatensystem mit dem Luftfahrzeug als Koordinatenursprung handelt;

Berechnen (520) einer Vektorsumme des X-Achsen-Einheitsvektors $k_x$ und des Y-Achsen-Einheitsvektors $k_y$;

Darstellen (530) eines Neigungswinkels unter Verwendung der Vektorsumme und Durchführen (540) einer Transformation zwischen dem North-East-Down-Koordinatensystem und dem Steuerkoordinatensystem unter Verwendung des Neigungswinkels;

wobei der X-Achsen-Einheitsvektor und der Y-Achsen-Einheitsvektor jeweils unter Verwendung der folgenden Gleichungen berechnet werden:

$$\mathbf{k}_x = \frac{T\begin{bmatrix}1\\0\end{bmatrix}}{\|\,T\begin{bmatrix}1\\0\end{bmatrix}\,\|} \;;\; \mathbf{k}_y = \frac{T\begin{bmatrix}0\\1\end{bmatrix}}{\|\,T\begin{bmatrix}0\\1\end{bmatrix}\,\|}$$

wobei T eine 2 x 2-Matrix ist, die aus Daten aus den beiden ersten Reihen und den ersten beiden Spalten der Eulerwinkel-Rotationsmatrix besteht, $k_x$ der X-Achsen-Einheitsvektor ist, $k_y$ der Y-Achsen-Einheitsvektor ist und $\|\,\mathbf{T}\cdot\begin{bmatrix}1\\0\end{bmatrix}\,\|$ eine Norm eines Produkts von Matrizen ist;

wobei der Neigungswinkel unter Verwendung der folgenden Gleichung dargestellt wird:

$$\Psi = \tan^{-1}\frac{\mathbf{k}(2)}{\mathbf{k}(1)} - 45°$$

wobei $\Psi$ der Neigungswinkel ist, die Vektorsumme ein zweidimensionaler Vektor ist und k(2) und k(1) jeweils die Länge von Projektionen der Vektorsumme auf die Y-Achse bzw. die X-Achse sind.

**2.** Kurssteuerungsverfahren nach Anspruch 1, wobei eine Rotationssequenz der Eulerwinkel-Rotationsmatrix darin besteht, dass die Eulerwinkel-Rotationsmatrix in Bezug auf eine Rollachse, eine Gierachse und eine Nickachse des Luftfahrzeugs sequenziell rotiert.

**3.** Unbemanntes Luftfahrzeug, **dadurch gekennzeichnet, dass** es einen Körper, Rotoren, einen Motor zum drehenden Antreiben der Rotoren und eine Steuerung umfasst, wobei die Rotoren symmetrisch am Körper angeordnet sind; und die Steuerung den Betrieb des Motors unter Verwendung des Verfahrens zur Steuerung des Kurses für ein Luftfahrzeug nach einem der Ansprüche 1 bis 2 steuert.

**4.** Unbemanntes Luftfahrzeug nach Anspruch 3, wobei es sich bei dem unbemannten Luftfahrzeug um ein Vier-Rotoren-Luftfahrzeug handelt und zwei der vier Rotoren in Bezug auf den Körper symmetrisch angeordnet sind.

## Revendications

1. Procédé de commande de cap d'un véhicule aérien, comprenant :

   la réception d'une instruction de commande d'un contrôleur, l'instruction de commande comprenant au moins une accélération initiale dans un système de coordonnées de commande ;
   la transformation de l'accélération initiale dans le système de coordonnées de commande en une première accélération dans le système de coordonnées nord-est bas ;
   la transformation de la première accélération dans le système de coordonnées nord-est bas en une accélération cible d'un système de coordonnées corporelles à l'aide d'une matrice de rotation de l'angle d'Euler ; et
   la commande d'un moteur du véhicule aérien pour qu'il fonctionne selon l'accélération cible ;
   où la transformation de l'accélération initiale dans le système de coordonnées de commande en la première accélération dans le système de coordonnées nord-est bas comprend :

   l'obtention (510) d'un vecteur unitaire de l'axe X et d'un vecteur unitaire de l'axe Y des projections d'un axe X et d'un axe Y du système de coordonnées corporelles sur un plan de niveau du système de coordonnées nord-est bas, le système de coordonnées corporelles étant un système de coordonnées ayant le véhicule aérien comme point d'origine des coordonnées ;
   le calcul (520) d'une somme vectorielle du vecteur unitaire de l'axe X $k_x$ et du vecteur unitaire de l'axe Y $k_y$ ;
   la représentation (530) d'un angle d'inclinaison à l'aide de la somme vectorielle ; et
   la réalisation (540) d'une transformation entre le système de coordonnées nord-est bas et le système de coordonnées de commande à l'aide de l'angle d'inclinaison ;
   où le vecteur unitaire de l'axe X et le vecteur unitaire de l'axe Y sont respectivement calculés à l'aide des formules suivantes ;

   $$\mathbf{k}_x = \frac{T\begin{bmatrix}1\\0\end{bmatrix}}{\left\| T\begin{bmatrix}1\\0\end{bmatrix} \right\|} \; ; \; \mathbf{k}_y = \frac{T\begin{bmatrix}0\\1\end{bmatrix}}{\left\| T\begin{bmatrix}0\\1\end{bmatrix} \right\|}$$

   où T est une matrice 2 x 2 constituée de données provenant des deux premières rangées et des deux premières colonnes de la matrice de rotation de l'angle d'Euler, $k_x$ est le vecteur unitaire de l'axe X, $k_y$ est le vecteur unitaire de l'axe Y et $\left\| T \cdot \begin{bmatrix}1\\0\end{bmatrix} \right\|$ est une norme d'un produit de matrices ;
   où l'angle d'inclinaison est représenté à l'aide de la formule suivante :

   $$\Psi = \tan^{-1}\frac{\mathbf{k}(2)}{\mathbf{k}(1)} - 45°$$

   où $\Psi$ est l'angle d'inclinaison, la somme vectorielle est un vecteur bidimensionnel, et k(2) et k(1) sont respectivement la longueur des projections de la somme vectorielle sur l'axe Y et l'axe X.

2. Procédé de commande de cap selon la revendication 1, où une séquence de rotation de la matrice de rotation de l'angle d'Euler est telle que la matrice de rotation de l'angle d'Euler tourne de manière séquentielle par rapport à un axe de roulis, à un axe de cap et à un axe de tangage du véhicule aérien.

3. Véhicule aérien sans pilote, **caractérisé en ce qu'**il comprend un corps, des rotors, un moteur pour faire tourner les rotors et un contrôleur, où les rotors sont disposés de manière symétrique sur le corps ; et le contrôleur commande le fonctionnement du moteur en utilisant le procédé de commande de cap d'un véhicule aérien selon l'une quelconque des revendications 1 à 2.

4. Véhicule aérien sans pilote selon la revendication 3, où le véhicule aérien sans pilote est un véhicule aérien à quatre rotors ; et deux quelconques des quatre rotors sont disposés de manière symétrique par rapport au corps.

FIG. 1

FIG. 2

FIG. 3

FIG. 4

Respectively obtain an X-axis unit vector and a Y-axis
unit vector of projections of an X-axis and a Y-axis of a
body coordinate system on to a level plane of a local
horizontal coordinate system
510

Calculate a vector sum of the X-axis unit vector and the
Y-axis unit vector
520

Represent an inclination angle by using the vector sum
530

Perform transformation between the local horizontal
coordinate system and a control coordinate system by
using the inclination angle
540

## FIG. 5

## FIG. 6

FIG. 7

Changes of psi in a
common representation
manner

Changes of psi in a
representation manner
of the present invention

FIG. 8

FIG. 9

FIG. 10

**REFERENCES CITED IN THE DESCRIPTION**

**Patent documents cited in the description**

- US 2013173088 A1